# EUROPÄISCHE PATENTSCHRIFT

(11) **EP 2 249 461 B1**
(45) Veröffentlichungstag und Bekanntmachung des Hinweises auf die Patenterteilung: **01.02.2017**
(21) Anmeldenummer: 10004743.0
(22) Anmeldetag: 05.05.2010
(51) Int. Cl.: H02K 7/06, F16H 25/20

(54) **Elektromechanischer Linearantrieb**
Electromechanical linear drive
Entraînement linéaire électromécanique

(30) Priorität: 05.05.2009 DE 102009020040
(43) Veröffentlichungstag der Anmeldung: 10.11.2010
(73) Patentinhaber: PARKER-ORIGA GmbH, 70794 Filderstadt (DE)
(72) Erfinder: Eckstein, Denis, 72074 Tübingen (DE); Heß, Eberhard, 70794 Filderstadt (DE)
(74) Vertreter: Müller, Karl-Ernst

(56) Entgegenhaltungen:
- EP-A2- 1 496 600
- US-A1- 2005 011 291

## Beschreibung

Die Erfindung betrifft einen elektromechanischen Linearantrieb mit einem Gehäuse und mit wenigstens einer einen stirnseitigen Gehäusedeckel in einem Durchbruch durchgreifenden, aus dem Gehäuse einseitig hervorstehenden und von einem im Inneren des Gehäuses längsverschiebbar angeordneten Schubelement getragenen Kolbenstange, wobei das Schubelement zu seiner Verschiebung von einer mittels eines Antriebes angetriebenen Antriebsstange getragen und die Kolbenstange exzentrisch zur Antriebsstange angeordnet ist.

Ein elektromechanischer Linearantrieb zur Erzeugung translatorischer Vorschubbewegungen mit den vorgenannten Merkmalen ist aus der EP 1 496 600 A2 bekannt. In dem Gehäuse ist eine unter der Wirkung eines als Stator und Rotor ausgebildeten Antriebs drehbare Antriebsstange in den beiden das Gehäuse verschließenden Gehäusedeckeln gelagert. Auf der mit einem Außengewinde versehenen Antriebsstange ist eine Gewindemutter als Schubelement geführt, die mit einer gabelförmigen Stellstange fest verbunden ist, deren Gabelschenkel zwei exzentrisch zur Antriebsstange angeordnete Kolbenstangen bilden, die den zugeordneten Gehäusedeckel in jeweiligen Durchbrüchen durchgreifen. Bei Verdrehung der Antriebsstange verschiebt sich die das Schubelement bildende Gewindemutter auf dem Außengewinde der Antriebsstange und bewirkt so ein Ausfahren beziehungsweise Einfahren der Kolbenstangen.

Mit dem bekannten Linearantrieb ist der Nachteil verbunden, dass sich die Kolbenstangen bei der Verschiebung der Gewindemutter in den Durchbrüchen der Gehäusedeckel abstützen, sodass die Durchbrüche als Verdrehsicherung für den Antrieb wie auch die mit den Kolbenstangen verbundene Last wirken, was mit einer entsprechenden Beanspruchung der Kolbenstangen beziehungsweise der Durchbrüche in den Gehäusedeckeln verbunden ist.

Der Erfindung liegt daher die Aufgabe zugrunde, einen Linearantrieb mit den eingangs genannten, gattungsgemäßen Merkmalen derart weiterzubilden, dass die Beanspruchung von Kolbenstangen und/oder Gehäusedeckel durch die zu bewegende Last verringert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht hierzu vor, dass das die wenigstens eine Kolbenstange tragende Schubelement gegenüber dem Gehäuse mit einer mittels an Gehäuse und Schubelement jeweils angeordneter, ineinander greifender Führungselemente ausgebildeten kraftübertragenen Verdrehsicherung geführt ist. Mit der Erfindung ist der Vorteil verbunden, dass das Schubelement gegenüber dem Gehäuse verdrehgesichert geführt ist, sodass über die Last und die Kolbenstangen auf das Schubelement oder über die Antriebsstange eingetragene hohe Drehmomente von dem Schubelement aufgenommen und in das Gehäuse abgeleitet werden können. Da das Schubelement an der Stelle der Kraftübertragung auf das Gehäuse geführt und gehalten ist, ist die effektive Länge der Antriebsstange zwischen deren Lagerung und dem Schubelement im Hinblick auf denkbare Knickfälle durch hohe Lasten stark reduziert. Da die Kolbenstange beziehungsweise die Kolbenstangen nicht der Verdrehsicherung dienen, können schließlich in vorteilhafter Weise die Kolbenstange beziehungsweise die Kolbenstangen in nicht weiter beanspruchten Kolbenstangenlagern, beispielsweise in Form von Gleitlagern, in dem Gehäusedeckel geführt sein und zur Übertragung sehr hoher Kräfte herangezogen werden.

Gemäß einem Ausführungsbeispiel der Erfindung kann zunächst in einer einfachen Ausgestaltung vorgesehen sein, dass die Verdrehsicherung aus wenigstens einem an der Innenwandung des Gehäuses ausgebildeten leistenartigen Vorsprung und aus wenigstens einer an dem Schubelement ausgebildeten, den Vorsprung passend aufnehmenden Nut besteht.

Nach einem abgewandelten Ausführungsbeispiel der Erfindung kann vorgesehen sein, dass die Verdrehsicherung aus wenigstens einer an der Innenwandung des Gehäuses befestigten Führungsschiene und aus wenigstens einem an dem Schubelement angeordneten Führungswagen besteht, wobei der Führungswagen an der Führungsschiene mittels zusätzlicher reibungsmindernder Führungsmittel geführt sein kann, die nach Ausführungsbeispielen der Erfindung aus einer Rollen- oder Kugelführung bestehen können. Damit ist eine Leichtgängigkeit bei der Bewegung des von der Gewindespindel angetriebenen Schubelements im Gehäuse verbunden.

Soweit in einer alternativen Ausführungsform der Erfindung vorgesehen ist, dass die Verdrehsicherung aus wenigstens einer in den stirnseitigen Gehäusedeckel beidseitig festgelegten Führungsstange besteht, die in einem an dem Schubelement ausgebildeten Führungslager aufgenommen ist, ist mit dieser in das Innere des Gehäuses verlegten, aufgrund der beidseitigen Fixierung der Führungsstangen in den Gehäusedeckeln eine große Stabilität aufweisenden Verdrehsicherung der Vorteil verbunden, dass nur äußerst geringe Verdrehwinkel auftreten können. Somit ist der erfindungsgemäße Linearantrieb für präzise Positionieraufgaben hinsichtlich der an der Kolbenstange beziehungsweise an den Kolbenstangen angreifenden Nutzlast geeignet. Hierbei kann die Gleitfähigkeit des Schubelements in dem Gehäuse dadurch verbessert werden, dass in dem Schubelement wenigstens eine die Führungsstange in sich aufnehmende Führungsbuchse als Führungslager angeordnet ist, die als Gleitbuchse oder alternativ als Kugelbuchse ausgeführt sein kann. Es ist vorteilhaft, wenn in symmetrischer Anordnung zur Längsachse der Gewindespindel eine Mehrzahl von Führungsstangen und entsprechend angeordneten Führungslagern beziehungsweise Führungsbuchsen am Schubelement angeordnet sind.

Für die Realisierung der Erfindung ist die Anbringung einer Kolbenstange an dem Schubelement ausreichend. Nach einem Ausführungsbeispiel der Erfindung kann jedoch vorgesehen sein, dass an dem Schubelement eine Mehrzahl von aus dem Gehäuse hervorstehenden Kolbenstangen angeordnet ist. Hierzu sind zur Verwirklichung der Erfindung zwei Kolbenstangen ausreichend. Es können jedoch auch mehr als zwei Kolbenstangen in einer beliebigen Anordnung relativ zur Antriebsstange vorgesehen sein.

Vorzugsweise ist nach einem Ausführungsbeispiel der Erfindung vorgesehen, dass die mehreren Kolbenstangen in einer symmetrischen Anordnung bezüglich der Antriebsstange vorgesehen sind. Hiermit ist in vorteilhafter Weise die Entstehung und Einwirkung von Kippmomenten auf die Bestandteile des elektromechanischen Linearantriebs ausgeschlossen.

Nach einem Ausführungsbeispiel der Erfindung ist vorgesehen, dass die Antriebsstange in einer aus der EP 1 496 600 A2 an sich bekannten Weise beidseitig in den die Stirnseiten des Gehäuses verschließenden Gehäusedeckeln gelagert ist,

Soweit bei einer Ausbildung der Antriebsstange als Spindeltrieb die Drehzahl der Gewindespindel im allgemeinen durch deren frei tragende Länge, das heißt den Stützabstand ihrer Endlager bestimmt ist, ist nach einem Ausführungsbeispiel der Erfindung vorgesehen, dass die Gewindespindel zwischen ihren Endlagerungen an den Gehäusedeckeln mittels wenigstens eines weiteren, im Inneren des Gehäuses angeordneten Lagers abgestützt ist; hiermit ist der Vorteil einer dadurch möglichen Drehzahlerhöhung verbunden.

Das erfindungsgemäße Konzept lässt sich nach Ausführungsbeispielen der Erfindung bei den beiden eingangs beschriebenen und zum Stand der Technik zählenden Antriebskonzepten verwirklichen, nämlich sowohl bei dem nach Art eines Linearmotors aufgebauten Antriebsmechanismus als auch bei dem als Spindeltrieb ausgebildeten Antriebsmechanismus. Insbesondere bei einem Spindeltrieb als Antriebsmechanismus kommt der erfindungsgemäße Aspekt einer beidseitigen Lagerung der Gewindespindel in den beiden stirnseitigen Gehäusedeckeln zum Tragen, da damit die Gewindespindel wesentlich geringeren Einschränkungen hinsichtlich Drehzahl und Ausfahrgeschwindigkeit unterliegt.

Im Rahmen der Erfindung kann vorgesehen sein, dass die Gewindespindel als Trapezgewindespindel ausgebildet ist, womit die Vorteile einer Selbsthemmung und großen Aktionskraft verbunden sind. Alternativ kann vorgesehen sein, dass die Gewindespindel als Kugelumlaufspindel ausgebildet ist, womit eine hohe Präzision und Positioniergenauigkeit verbunden sind. Auch andere Spindeltypen sind ohne Einschränkungen bei der Erfindung einsetzbar.

Im Hinblick auf unterschiedliche Einsatzbedingungen kann vorgesehen sein, dass die Gewindespindel in den stirnseitigen Gehäusedeckeln mit einem eine Temperaturdehnung der Gewindespindel berücksichtigenden axialen Spiel gelagert ist. Im Einzelnen kann dabei vorgesehen sein, dass wenigstens ein Ende der Gewindespindel einem an dem Gehäusedeckel angeordneten Loslager gehalten ist.

Im Rahmen einer Verwirklichung der Erfindung kann die Gewindespindel in an sich bekannter Weise an den Elektromotor über ein zwischengeschaltetes Getriebe angeschlossen sein; es ist aber in Abhängigkeit von der Anordnung des Motors auch ein Direktantrieb der Gewindespindel denkbar.

Soweit der Motor am Gehäuse angeflanscht sein kann, können Motor beziehungsweise Getriebe axial, gewinkelt oder parallel am Antriebsdeckel angeflanscht und gegebenenfalls mit einer mit der Gewindespindel verbundenen Antriebswelle gekoppelt sein, wie dies aus verschiedenen zum Stand der Technik zählenden Ausführungsformen bekannt ist.

In der Zeichnung sind Ausführungsbeispiele der Erfindung wiedergegeben, welches nachstehend beschrieben sind. Es zeigen:
- Fig. 1: einen elektromechanischen Linearantrieb in Spindeltrieb-Bauweise mit zwei Kolbenstangen in einer schematischen Schnittansicht,
- Fig. 2: den Gegenstand der Figur 1 mit einem als Linearmotor ausgebildeten Antriebskonzept,
- Fig. 3: eine Stirnansicht des im Gehäuse verdrehgesichert geführten Schubelements als Teil des elektromechanischen Linearantriebs gemäß Figuren 1 oder 2.
- Fig. 4: eine alternative Verdrehsicherung für das Schubelement gemäß Figur 3,
- Fig. 5: eine wiederum alternative Ausführungsform der Verdrehsicherung für das Schubelement entsprechend Figur 3.

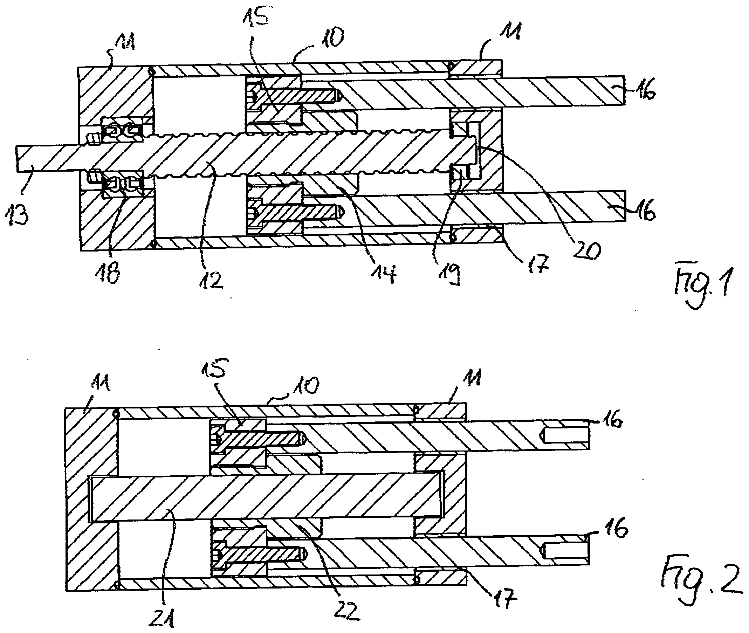

Wie sich zunächst aus der Figur 1 ergibt, ist ein im wesentlichen zylindrisches Gehäuse 10 durch zwei stirnseitig aufgesetzte und das Gehäuse 10 verschließende Gehäusedeckel 11 verschlossen, wobei die Gehäusedeckel 11 mittels Befestigungsschrauben mit dem Gehäuse 10 verbunden sind. Im Inneren des Gehäuses 10 ist eine das Gehäuse durchsetzende Gewindespindel 12 als Antriebsstange angeordnet, die auf der einen, bei dem dargestellten Ausführungsbeispiel linken Gehäuseseite mit einem Antriebsansatz 13 den zugeordneten Gehäusedeckel 11 durchgreift, so dass über einen an den Antriebsansatz 13 angeschlossenen, nicht dargestellten Elektromotor die Gewindespindel 12 in Drehung versetzt werden kann. Die Gewindespindel 12 ist dabei in beiden Gehäusedeckeln 11 in geeigneter Weise in zugeordneten Lagern gelagert. Die Lagerung erfolgt über ein Festlager 18 und ein Loslager 19, das ein Axialspiel 20 zwischen dem stirnseitigen Ende der Gewindespindel 12 und dem zugeordneten Gehäusedeckel 11 zulässt, um beispielsweise einer etwaigen temperaturbedingten Ausdehnung der Gewindespindel 12 Rechnung zu tragen.

Auf der Gewindespindel 12 ist eine Gewindemutter 14 geführt, die mit einem die Gewindespindel 12 umgreifenden Schubelement 15 verbunden ist derart, dass bei Drehung der Gewindespindel 12 das Schubelement 15 unter der Wirkung der Gewindemutter 14 in dem Gehäuse 10 längsverschoben wird. An dem Schubelement 15 sind bei dem in der Figur 1 dargestellten Ausführungsbeispiel in einer symmetrischen Anordnung zwei Kolbenstangen 16 in einer exzentrischen Lage zur Gewindespindel 12 befestigt, wobei die Kolbenstangen 16 den zugeordneten Gehäusedeckel 11 in entsprechend vorgesehenen, insbesondere als Gleitlager ausbildeten Kolbenstangenlagern 17 durchgreifen, darin geführt sind und frei über das Gehäuse 10 hervorstehen, so dass in einer nicht dargestellten, an sich aber bekannten Weise am Ende der Kolbenstangen 16 eine Nutzlast angeschlagen werden kann.

Das in Figur 2 dargestellte Ausführungsbeispiel unterscheidet sich von dem zuvor beschriebenen Ausführungsbeispiel gemäß Figur 1 in dem Antriebskonzept, welches auf dem Prinzip eines Linearmotors beruht. Hierbei ist zwischen den Gehäusedeckeln 11 eine feststehende Magnetstange 21 als Antriebsstange angeordnet, die als Stator des Linearmotors dient. Mit dem Schubelement 15 als Träger der Kolbenstangen 16 ist ein eine Spulenanordnung aufweisender Läufer 22 verbunden, der sich aufgrund einer entsprechend erzeugten Magnetfeldänderung der Spule längs der Magnetstange 21 bewegt.

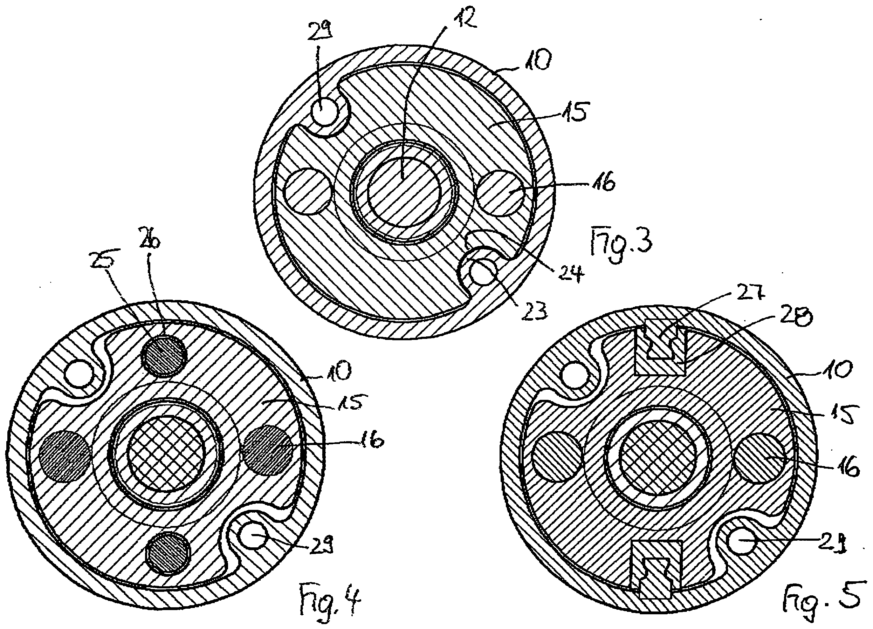

Soweit es erfindungsgemäß von Bedeutung ist, dass das Schubelement 15 in dem Gehäuse 10 verdrehgesichert geführt ist, sind in den Figuren 3 bis 5 Ausführungsbeispiele hinsichtlich der Ausbildung einer solchen Verdrehsicherung dargestellt.

Bei dem in Figur 3 dargestellten Ausführungsbeispiel sind zur Ausbildung einer Verdrehsicherung in symmetrischer Verteilung zwischen den beiden Gehäusedeckeln 11 verlaufende und sich durch das Gehäuse 10 erstreckende leistenartige Vorsprünge 23 vorgesehen. Die leistenartige Vorsprünge 23 sind in entsprechend am äußeren Umfang des Schubelements 15 ausgebildeten Nuten 24 aufgenommen, so dass das Schubelement 15 formschlüssig gegenüber den leistenartigen Vorsprüngen 23 festgelegt ist und bei seiner Längsverschiebung an den leistenartige Vorsprüngen 23 verdrehgesichert geführt ist. Im Bereich der leistenartigen Vorsprünge 23 sind an den Stirnflächen des Gehäuses 10 noch Befestigungsöffnungen 29 zur Aufnahme der zur Befestigung der Gehäusedeckel 11 verwendeten Schrauben ausgebildet.

Alternativ zu den Vorsprüngen 23 sind bei dem in Figur 4 dargestellten Ausführungsbeispiel zur Ausbildung der Verdrehsicherung zwischen den Gehäusedeckeln 11 verlaufende Führungsstangen 25 angeordnet, die in in dem Schubelement 15 ausgebildeten Führungslagern 26 aufgenommen sind. Diese Führungslager 26 können beispielsweise als Führungsbuchsen in Form einer Kugelbuchse oder einer Gleitbuchse ausgebildet sein. Auch hierdurch ist eine verdrehgesicherte Führung des Schubelements 15 im Gehäuse 10 gewährleistet.

Gemäß Figur 5 schließlich sind zur Ausbildung der Verdrehsicherung am Gehäuse 10 eine profilierte Führungsschiene 27 und am Schubelement 15 ein die Führungsschiene 27 umfassender Führungswagen 28 angeordnet, so daß durch Zusammenwirken von Führungswagen 28 und Führungsschiene 27 ebenfalls eine verdrehgesicherte Führung des Schubelementes 15 bei dessen Längsbewegung im Gehäuse 10 gewährleistet ist.

Die in der vorstehenden Beschreibung, den Patentansprüchen, und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Elektromechanischer Linearantrieb mit einem Gehäuse (10) und mit wenigstens einer einen stirnseitigen Gehäusedeckel (11) in einem Durchbruch durchgreifenden, aus dem Gehäuse (10) einseitig hervorstehenden und von einem im Inneren des Gehäuses (10) längsverschiebbar angeordneten Schubelement (15) getragenen Kolbenstange (16), wobei das Schubelement (15) zu seiner Verschiebung von einer mittels eines Antriebes angetriebenen Antriebsstange getragen und die Kolbenstange (16) exzentrisch zur Antriebsstange angeordnet ist, **dadurch gekennzeichnet, dass** das die wenigstens eine Kolbenstange (16) tragende Schubelement (15) gegenüber dem Gehäuse (10) mit einer mittels an Gehäuse (10) und Schubelement (15) jeweils angeordneter, ineinander greifender Führungselemente ausgebildeten kraftübertragenen Verdrehsicherung geführt ist.

2. Elektromechanischer Linearantrieb nach Anspruch 1, **dadurch gekennzeichnet, dass** die Verdrehsicherung aus wenigstens einem an der Innenwandung des Gehäuses (10) ausgebildeten leistenartigen Vorsprung (23) und aus wenigstens einer an dem Schubelement (15) ausgebildeten, den Vorsprung (23) passend aufnehmenden Nut (24) besteht.

3. Elektromechanischer Linearantrieb nach Anspruch 1, **dadurch gekennzeichnet, dass** die Verdrehsicherung aus wenigstens einer an der Innenwandung des Gehäuses (10) befestigten Führungsschiene (27) und aus wenigstens einem an dem Schubelement (15) angeordneten Führungswagen (28) besteht.

4. Elektromechanischer Linearantrieb nach Anspruch 3, **dadurch gekennzeichnet, dass** der Führungswagen (28) an der Führungsschiene (27) mittels zusätzlicher reibungsmindernder Führungsmittel geführt ist.

5. Elektromechanischer Linearantrieb nach Anspruch 4, **dadurch gekennzeichnet, dass** die Führungsmittel aus einer Rollen- oder Kugelführung bestehen

6. Elektromechanischer Linearantrieb nach Anspruch 1, **dadurch gekennzeichnet, dass** die Verdrehsicherung aus wenigstens einer in den stirnseitigen Gehäusedeckeln (11) beidseitig festgelegten Führungsstange (25) besteht, die in einem an dem Schubelement (15) ausgebildeten Führungslager (26) aufgenommen ist,

7. Elektromechanischer Linearantrieb nach Anspruch 6, **dadurch gekennzeichnet, dass** in dem Schubelement (15) wenigstens eine die Führungsstange (25) in sich aufnehmende Gleitbuchse angeordnet ist.

8. Elektromechanischer Linearantrieb nach Anspruch 6, **dadurch gekennzeichnet, dass** in dem Schubelement (15) wenigstens eine die Führungsstange (25) in sich aufnehmende Kugelbuchse angeordnet ist.

9. Elektromechanischer Linearantrieb nach einem der Ansprüche 6 bis 8 **dadurch gekennzeichnet, dass** in symmetrischer Anordnung zur Längsachse der Gewindespindel (12) eine Mehrzahl von Führungsstangen (25) und entsprechend angeordneten Führungslager (26) am Schubelement (15) angeordnet sind.

10. Elektromechanischer Linearantrieb nach einem der Ansprüche 1 bis 9, **dadurch gekennzeichnet, dass** an dem Schubelement (15) eine Mehrzahl von aus dem Gehäuse (10) hervorstehenden Kolbenstangen (16) angeordnet ist.

11. Elektromechanischer Linearantrieb nach Anspruch 10, **dadurch gekennzeichnet, dass** die mehreren Kolbenstangen (16) in einer symmetrischen Anordnung bezüglich der Antriebsstange vorgesehen sind.

12. Elektromechanischer Linearantrieb nach einem der Ansprüche 1 bis 11, **dadurch gekennzeichnet, dass** die Antriebsstange beidseitig in die Stirnseiten des Gehäuses (10) verschließenden Gehäusedeckeln (11) gelagert ist.

13. Elektromechanischer Linearantrieb nach Anspruch 12, **dadurch gekennzeichnet, dass** die Antriebsstange zwischen ihren Endlagerungen an den Gehäusedeckeln (11) mittels wenigstens eines weiteren, im Inneren des Gehäuses (10) angeordneten Lagers abgestützt ist.

14. Elektromechanischer Linearantrieb nach einem der Ansprüche 1 bis 13, **dadurch gekennzeichnet, dass** der Antriebsmechanismus als Spindeltrieb mit einer drehbaren Gewindespindel (12) als Antriebsstange ausgebildet ist und das Schubelement (15) durch die Drehung der Gewindespindel (12) längsverschiebbar ist.

15. Elektromechanischer Linearantrieb nach einem der Ansprüche 1 bis 11, **dadurch gekennzeichnet, dass** der Antriebsmechanismus als Linearmotor ausgebildet und die Antriebsstange als Magnetstange (21) ausgebildet und das Schubelement (15) mittels eines eine Spulenanordnung aufweisenden Läufers (22) entlang der Magnetstange (21) längsverschiebbar eingerichtet ist.

## Claims

1. Electromechanical linear drive with a housing (10) and with at least one piston rod (16) protruding on one side from the housing (10), extending through an opening on the end face housing lid (11), supported by a push element (15) arranged for longitudinal movement in the interior of the housing (10), wherein the push element (15) for its movement is supported by a drive shaft driven by a drive and the piston rod (16) is arranged eccentric to the drive shaft, **characterized in that** the push element (15) supporting the at least one piston rod (16) is guided relative to the housing (10) with a force transmitting twist protection formed as interlocking guiding elements arranged at the housing (10) and the push element (15).

2. Electromechanical linear drive according to claim 1, **characterized in that** the twist protection consists of at least one strip like projection (23) at the inner wall of the housing (10) and at least one groove (24) formed at the push element (15) and suitably receiving the projection (23).

3. Electromechanical linear drive according to claim 1, **characterized in that** that the twist protection consists of at least one guide rail (27) mounted at the inner wall of the housing (10) and at least one guide carriage (28) arranged at the push element (15).

4. Electromechanical linear drive according to claim 3, **characterized in that** the carriage (28) is guided at the guide rail (27) by means of additional friction reducing guiding means.

5. Electromechanical linear drive according to claim 4, **characterized in that** the guiding means consist of a ball bearing traveler or a guide roller.

6. Electromechanical linear drive according to claim 1, **characterized in that** the twist protection consists of at least one guide rod (25) mounted in the end-facing housing lids (11) on both sides, that is received in a guide bearing (26) formed at the push element (15).

7. Electromechanical linear drive according to claim 6, **characterized in that** at least one glide bushing, receiving in it the guide rod (25), is arranged in the push element (15).

8. Electromechanical linear drive according to claim 6, **characterized in that** at least one ball bushing, receiving in it the guide rod (25), is arranged in the push element (15).

9. Electromechanical linear drive according to one of the claims 6 to 8, **characterized in that** in symmetrical arrangement to the longitudinal axis of the threaded spindle (12) a plurality of guide rods (25) and accordingly arranged guide bearings (26) are arranged at the push element (15).

10. Electromechanical linear drive according to one of the claims 1 to 9, **characterized in that** a plurality of piston rods (16) protruding from the housing (10) are arranged at the push element (15).

11. Electromechanical linear drive according to claim 10, **characterized in that** the plurality of piston rods (16) are provided for in a symmetrical arrangement relative to the drive shaft.

12. Electromechanical linear drive according to one of the claims 1 to 11, **characterized in that** that the drive shaft is arranged on both sides of the housing lids (11) sealing the end faces of the housing (10).

13. Electromechanical linear drive according to claim 12, **characterized in that** the drive shaft is supported between its end bearings at the housing lids (11) with at least one further bearing arranged in the interior of the housing (10).

14. Electromechanical linear drive according to one of the claims 1 to 13, **characterized in that** the drive mechanism is formed as a spindle drive with a rotatable threaded spindle (12) as drive shaft and by rotating the threaded spindle (12) the push element (15) can be moved in a longitudinal direction.

15. Electromechanical linear drive according to one of the claims 1 to 11, **characterized in that** the drive mechanism is formed as a linear drive and the drive shaft is formed as a magnetic rod (21) and the push element (15) can be moved in a longitudinal direction along the magnetic rod (21) by a rotor (22) having a coil arrangement.

## Revendications

1. Système d'entraînement linéaire électromécanique avec un boîtier (10) et avec au moins une tige de piston (16) traversant un couvercle de boîtier (11) avant dans un passage, ressortant unilatéralement du boîtier (10) et porté par un élément de poussée (15) disposé longitudinalement mobile à l'intérieur du boîtier (10), l'élément de poussée (15) étant supporté pour son déplacement par une tige d'entraînement entraînée au moyen d'un système d'entraînement et la tige de piston (16) étant disposée de manière excentrique par rapport à la tige d'entraînement, **caractérisé en ce que** l'élément de poussée (15) portant au moins une tige de piston (16) est guidé par rapport au boîtier (10) avec une sécurité antirotation à transmission de force constituée au moyen d'éléments de guidage s'engrenant l'un dans l'autre, respectivement disposés sur le boîtier (10) et l'élément de poussée (15).

2. Système d'entraînement linéaire électromécanique selon la revendication 1, **caractérisé en ce que** la sécurité antirotation est au moins composée d'un élément en saillie (23) en forme de languette constitué sur la paroi intérieure du boîtier (10) et d'au moins une rainure (24) recevant de façon appropriée l'élément en saillie (23), constituée sur l'élément de poussée (15).

3. Système d'entraînement linéaire électromécanique selon la revendication 1, **caractérisé en ce que** la sécurité antirotation est composée d'au moins un rail de guidage (27) fixé à la paroi intérieure du boîtier (10) et d'au moins un chariot de guidage (28) disposé sur l'élément de poussée (15).

4. Système d'entraînement linéaire électromécanique selon la revendication 3, **caractérisé en ce que** le chariot de guidage (28) est guidé sur le rail de guidage (27) au moyen de moyens de guidage supplémentaires réduisant le frottement.

5. Système d'entraînement linéaire électromécanique selon la revendication 4, **caractérisé en ce que** les moyens de guidage sont composés d'un guidage à galets ou à billes.

6. Système d'entraînement linéaire électromécanique selon la revendication 1, **caractérisé en ce que** la sécurité antirotation est composée d'au moins une tige de guidage (25) fixée des deux côtés dans les couvercles de boîtier (11) avant, qui est logée dans un support de guidage (26) constitué sur l'élément de poussée (15).

7. Système d'entraînement linéaire électromécanique selon la revendication 6, **caractérisé en ce que** dans l'élément de poussée (15) est disposée au moins une douille de glissement recevant en elle la tige de guidage (25).

8. Système d'entraînement linéaire électromécanique selon la revendication 6, **caractérisé en ce que** dans l'élément de poussée (15) est disposée au moins une douille sphérique recevant en elle la tige de guidage (25).

9. Système d'entraînement linéaire électromécanique selon l'une quelconque des revendications 6 à 8, **caractérisé en ce qu'**une pluralité de tiges de guidage (25) et de supports de guidage (26) disposés de façon correspondante est disposée sur l'élément de poussée (15) en disposition symétrique par rapport à l'axe longitudinal de la tige filetée (12).

10. Système d'entraînement linéaire électromécanique selon l'une quelconque des revendications 1 à 9, **caractérisé en ce qu'**une pluralité de tiges de piston (16) ressortant du boîtier (10) est disposée sur l'élément de poussée (15).

11. Système d'entraînement linéaire électromécanique selon la revendication 10, **caractérisé en ce que** les nombreuses tiges d'entraînement (16) sont prévues dans une disposition symétrique par rapport à la tige d'entraînement.

12. Système d'entraînement linéaire électromécanique selon l'une quelconque des revendications 1 à 11, **caractérisé en ce que** la tige d'entraînement est logée des deux côtés dans les couvercles de boîtiers (11) fermant les faces avant du boîtier (10).

13. Système d'entraînement linéaire électromécanique selon la revendication 12, **caractérisé en ce que** la tige d'entraînement est supportée entre ses logements extrêmes sur les couvercles de boîtier (11) au moyen d'au moins une autre support disposé à l'intérieur du boîtier (10).

14. Système d'entraînement linéaire électromécanique selon l'une quelconque des revendications 1 à 13, **caractérisé en ce que** le mécanisme d'entraînement est constitué comme un entraînement à tige avec une tige filetée (12) rotative comme tige d'entraînement et l'élément de poussée (15) est longitudinalement mobile par la rotation de la tige filetée (12).

15. Système d'entraînement linéaire électromécanique selon l'une quelconque des revendications 1 à 11, **caractérisé en ce que** le mécanisme d'entraînement est constitué comme moteur linéaire et la tige d'entraînement est constituée comme tige magnétique (21) et l'élément de poussée (15) est agencé longitudinalement mobile le long de la tige magnétique (21) au moyen d'un induit (22) comportant un agencement de bobine.
